# EUROPÄISCHE PATENTSCHRIFT

(11) **EP 2 254 792 B1**
(45) Veröffentlichungstag und Bekanntmachung des Hinweises auf die Patenterteilung: **16.07.2014**
(21) Anmeldenummer: 09721874.7
(22) Anmeldetag: 17.03.2009
(51) Int. Cl.: B64C 39/02, B64C 27/08, B64D 47/08

(54) **DREHFLÜGELFLUGGERÄT**
ROTARY-WING AIRCRAFT
AÉRONEF À VOILURE TOURNANTE

(30) Priorität: 18.03.2008 DE 102008014853
(43) Veröffentlichungstag der Anmeldung: 01.12.2010
(73) Patentinhaber: Ascending Technologies GmbH, 82152 Krailling (DE)
(72) Erfinder: ACHTELIK, Michael, 82131 Stockdorf (DE); STUMPF, Jan, 82152 Planegg (DE); GURDAN, Daniel, 82166 Gräfeling (DE); DOTH, Klaus-Michael, 90522 Oberasbach (DE)
(74) Vertreter: Schulz, Oliver Frank Michael
(86) Internationale Anmeldenummer: PCT/EP2009/001965
(87) Internationale Veröffentlichungsnummer: WO 2009/115300

(56) Entgegenhaltungen:
- EP-A- 1 502 851
- DE-A1-102005 022 706
- US-A- 1 892 036
- US-A- 2 987 272
- US-A- 4 032 084
- US-B1- 6 260 796

## Beschreibung

Diese Erfindung betrifft im Allgemeinen Drehflügelfluggeräte mit einer Mehrzahl von Rotoren. Spezieller betrifft die Erfindung ein Drehflügelfluggerät, das sich insbesondere für die Erstellung von Photo- und Videoaufnahmen aus der Luft eignet.

Drehflügelfluggeräte mit einer Mehrzahl von Rotoren sind im Stand der Technik gut bekannt. Derzeit am weitesten verbreitet sind Quadrokopter, die durch vier in einer Ebene angeordnete, im Wesentlichen senkrecht nach unten wirkende Rotoren definiert sind. Der Vorteil von Drehflügelfluggeräten mit mehreren Rotoren besteht im Allgemeinen darin, dass die drei Flugachsen Längsachse, Querachse und Hochachse allein durch Variation des Schubs der einzelnen Rotoren angesteuert werden können.

Derartige Fluggeräte werden immer häufiger zur Erstellung von Photo- und Videoaufnahmen aus der Luft verwendet. Dabei kommen insbesondere modellhelikopterähnliche, manuell gesteuerte oder autonome Drehflügelfluggeräte zum Einsatz.

Aus der DE 102005061741A1 ist ein mehr-rotoriges Flugsystem bekannt, bei welchem die Rotoren unabhängig voneinander kollektiv verstellbar ausgeführt sind.

Aus der DE 202006013909U1 ist ein Fluggerät, insbesondere Quadrokopter, mit einem zentral angebrachten Basiselement und insbesondere über Steck- und Schraubverbindung lösbar am Basiselement angebrachten Auslegern bekannt.

Aus der DE 102006021182A1 ist ein Fluggerät mit vier horizontalen Antriebsrotoren bekannt, von denen zwei übereinander angeordnet eine gemeinsame Drehachse teilen.

Der Artikel "McKerrow, P, Modelling the Draganflyer four-rotor helicopter, Proceedings of the IEEE International Conference on Robotics and Automation, 26 April - 1. Mai 2004, 4, 3596-3601. Copyright IEEE 2004, http://ro.uow.edu.au/infopapers/100" beschreibt einen ferngesteuerten 4-rotorigen Helikopter und gibt eine theoretische Analyse der dynamischen Eigenschaften dieses Helikopters zur Entwicklung eines Computersteuerungssystems für stabiles Hovering wider.

Die AT 203 876 B beschreibt einen Hubschrauber mit mindestens zwei Tragschrauben mit dem Ziel, die Verwendungsmöglichkeit eines solchen Hubschraubers zu erweitern.

Die US 6 260 796 B1 offenbart ein Rückkopplungssteuerungssystem für einen mehrrotorigen Helikopter.

Die DE 10 2005 010 336 A1 beschreibt einen Hubschrauber mit drei oder mehr Hubeinheiten mit jeweils wenigstens einem Rotor und wenigstens einem den Rotor antreibenden, elektronisch kommutierten Gleichstrommotor. Dabei ist für vorzugsweise jede Hubeinheit wenigstens ein Sensor zur Erfassung der Drehbewegung einer rotierenden Komponente der Hubeinheit vorgesehen.

Die EP 1 901 153 A1 offenbart einen autonomen Miniaturhelikopter mit mehreren Rotoren sowie ein Verfahren zur Steuerung eines solchen Helikopters durch Anwenden einer Echtzeitjustierung während der Auswertung von Flugparametern des Helikopters.

Die WO 2005/035362 A1 beschreibt Frachttransportmittel mit Übertragungsmitteln, umfassend zwei parallel angeordnete Rotorsysteme, für eine Bewegung der Fracht bis zu einer Höhe von 80 km über der Erdoberfläche.

Das weiteren ist Dokument US 2, 987, 272 bekannt, welches den nächstliegenden stand der Technik darstellt und den Oberbegriff des Anspruchs 1 offenbart.

Die Fluggeräte des Standes der Technik haben gemeinsam, dass Lasten wie beispielsweise optische oder sensorische Elemente, z. B. zur Photo- oder Videoaufzeichnung oder Umwelterfassung, entweder unterhalb oder oberhalb der Rotorebene zentral am Fluggerät angebracht werden müssen, um die Last gleichmäßig auf die einzelnen Rotoren zu verteilen. Eine Konsequenz daraus ist, dass das Blickfeld der optischen oder sensorischen Elemente durch die Rotorebene und andere Teile des Trägersystems begrenzt ist. Im Falle von Photo- und Videoaufzeichnungen beispielsweise sind bei zu großem Öffnungswinkel oder zu geringer Neigung der Kamera nach unten (bei Montage unterhalb der Rotorebene) oder nach oben (bei Montage oberhalb der Rotorebene) Teile des Trägersystems im Bild.

Darüber hinaus muss sich ein Drehflügelfluggerät systembedingt und unabhängig von der Anzahl der Rotoren in Fahrtrichtung neigen, um in diese Richtung zu beschleunigen. Das erfordert in manchen Anwendungen eine aktive Neigungskompensation für die optischen oder sensorischen Elemente, um sicherzustellen, dass das zu erfassende Objekt den Erfassungsbereich nicht aufgrund der Neigung verlässt. Im Stand der Technik ragen in Folge der Neigungskompensation bei zu großen Neigungswinkeln Teile des Trägersystems in den Erfassungsbereich. Dadurch wird der ungestörte Bildraum dieser Elemente weiter eingeschränkt.

Es ist folglich Aufgabe der Erfindung, ein Drehflügelfluggerät bereitzustellen, das diese Nachteile des Standes der Technik überwindet. Diese Aufgabe wird durch die Merkmale des Anspruchs 1 gelöst, während vorteilhafte Ausführungsformen in den abhängigen Ansprüchen definiert sind.

Gemäß dem oben genannten Zweck wird ein Drehflügelfluggerät bereitgestellt, umfassend zumindest vier an Trägerelementen angeordnete Rotoren, wobei die Rotoren und Trägerelemente derart angeordnet sind, dass entlang einer Längsachse des Fluggeräts zumindest zwischen zwei endständigen Rotoren ein freies Sichtfeld definiert wird und die Trägerelemente eine geradlinige Verbindung zwischen den Rotoren jeweils auf einer Seite der Längsachse bereitstellen, wobei die Trägerelemente V-förmig symmetrisch bezüglich der Längsachse angeordnet sind.

Dadurch wird es auf dem erfindungsgemäßen Fluggerät angeordneten optischen und/oder sensorischen Elementen erstmals ermöglicht, kontinuierlich und störungsfrei sowohl die Bereiche oberhalb und unterhalb der Rotorebene, als auch den Bereich innerhalb der Rotorebene entlang zumindest einer Richtung der Längsachse des Fluggeräts zu erfassen. So kann insbesondere ein einzelnes optisches und/oder sensorisches Element von einem Bereich oberhalb der Rotorebene, durch die Rotorebene hindurch, und zu einem Bereich unterhalb der Rotorebene, und zurück, geschwenkt werden, ohne dass während des Schwenkens Bauteile des Fluggeräts in den Bild- oder Erfassungsbereich des optischen und/oder sensorischen Elements ragen.

Im Gegensatz zu Systemen des Standes der Technik ist es bei dem erfindungsgemäßen Fluggerät beispielsweise einer Kamera möglich, Gegenstände oder Personen bei Filmaufnahmen ohne Konfigurationsänderung sowohl von unten als auch von schräg vorne, von vorne oder von oben zu erfassen. Des Weiteren können bei dem erfindungsgemäßen Fluggerät in einem einzigen Flug Aufnahmen von unten (z.B. beim Unterfliegen einer Brücke) als auch von der Seite oder von oben gemacht werden. Erstmals ist es für die verschiedenen Aufnahmentypen nicht notwendig, die Kamera umzumontieren. Der Schwenkbereich der Kamera kann erheblich größer sein als bei herkömmlichen Systemen.

Somit kann die Kamera bei dem erfindungsgemäßen Fluggerät jede beliebige Orientierung im Raum annehmen, d.h. sphärisch jeden Punkt in der Umgebung erfassen. Ein geeigneter Schwenkmechanismus kann hierbei die geschilderte Schwenkung der Kamera in vertikaler Richtung bewerkstelligen, während die horizontale Änderung des Erfassungsbereichs über die Drehung des gesamten Fluggeräts um seine Hochachse erfolgt.

Darüber hinaus kann der Schwenkbereich der Kamera bei dem erfindungsgemäßen Fluggerät unabhängig von einer Nickbewegung des Fluggeräts sein. Mit einer neigungskompensierten Aufhängung der optischen und/oder sensorischen Elemente kann sich das Fluggerät zum Beschleunigung und Abbremsen beliebig neigen, ohne dass die Erfassung durch in den Erfassungsbereich ragende Rotor- oder Trägerteile gestört wird. Das ist sowohl bei einer aktuellen Ausrichtung der Erfassung nach unten, nach vorne als auch nach oben gewährleistet.

Ein solches Fluggeräts kann überall da eingesetzt werden, wo bisher herkömmliche Helikopter und Quadrokoptersysteme Einsatz finden. Es kann aber auch bei Aufnahmen eingesetzt werden, die einen wesentlich größeren vertikalen Bewegungsspielraum der Kamera erfordern.

Die Längs- bzw. Rollachse des Fluggeräts im Zusammenhang mit der Erfindung entspricht hierbei der Achse durch den Schwerpunkt des Fluggeräts, die sich in der üblichen, bevorzugten oder bauartbedingten Richtung der Vorwärtsbewegung des Fluggeräts erstreckt. Sie entspricht üblicherweise, jedoch nicht zwingend, einer längsten Symmetrieachse des Fluggeräts. Als endständige Rotoren kommen die in der Richtung der Längsachse des Fluggeräts vorne oder hinten liegenden Rotoren in Betracht.

Der Begriff freies Sichtfeld im Zusammenhang mit der Erfindung bedeutet einen Bereich, der frei von Bauteilen des Fluggeräts ist, so dass ausgehend von einem Ausgangspunkt innerhalb der räumlichen Begrenzungen des Fluggeräts eine störungsfreie Sicht bzw. Erfassung der Umgebung außerhalb der räumlichen Begrenzungen des Fluggeräts, beispielsweise durch optische und/oder sensorische Elemente, gewährleistet ist.

Bevorzugt wird das freie Sichtfeld entlang der Längsachse ausgehend von einem Punkt nahe dem Schwerpunkt des Fluggeräts definiert. Mit anderen Worten kommt als Ausgangspunkt innerhalb der räumlichen Begrenzungen des Fluggeräts insbesondere ein Punkt nahe dem Schwerpunkt des Fluggeräts in Betracht. Dies hat den Vorteil, dass, sofern Lasten wie optische und/oder sensorische Elemente zum Einsatz kommen, diese nahe dem Schwerpunkt angeordnet werden können, so dass die Flugeigenschaften des Fluggeräts so wenig wie möglich beeinflusst werden.

Bevorzugt kann das freie Sichtfeld eine horizontale Ausdehnung bezüglich der Längsachse von mehr als ± 15° aufweisen, beispielsweise von mehr als ± 30° und insbesondere von mehr als ± 45°, ausgehend von einem Punkt nahe dem Schwerpunkt des Fluggeräts. Die vertikale Ausdehnung des freien Sichtfelds kann bevorzugt größer als ± 15° sein, beispielsweise größer als ± 60°, größer als ± 90° und am insbesondere größer als + 120° bezüglich der Längsachse, ausgehend von einem Punkt nahe dem Schwerpunkt des Fluggeräts.

Je größer der Öffnungswinkel ist, desto größer ist der Bereich, der erfasst oder abgebildet werden kann, desto kleiner kann beispielsweise die Brennweite eines Objektivs gewählt werden. Ein Öffnungswinkel von 30° entspricht in etwa dem Bildwinkel, den ein Objektiv von 80 mm Brennweite im Kleinbildformat abbildet (Teleobjektiv). Ein Öffnungswinkel von 90° entspricht in etwa dem Bildwinkel, den ein Objektiv von 22 mm Brennweite im Kleinbildformat abbildet (Weitwinkelobjektiv). Eine große vertikale Ausdehnung des freien Sichtfelds hat darüber hinaus den Vorteil, dass ein optisches und/oder sensorisches Element in der Vertikalen geschwenkt werden kann, sei es zur Neigungskompensation oder zu einem störungsfreien Schwenken von einem Bereich oberhalb der Rotorebene, durch die Rotorebene hindurch, und zu einem Bereich unterhalb der Rotorebene und umgekehrt.

Bevorzugt können die zumindest vier Rotoren paarweise auf gegenüberliegenden Seiten der Längsachse des Drehflügelfluggeräts auf den Trägerelementen angeordnet sein, wobei zumindest das bezüglich der Längsachse vordere Paar von Rotoren derart mit Abstand zueinander angeordnet sein kann, dass zwischen dem Paar von Rotoren das freie Sichtfeld definiert wird. Bevorzugt kann dieser Abstand mindestens einen Rotordurchmesser oder mehr betragen.

In einer bevorzugten Ausführungsform der Erfindung können sich die Trägerelemente im Wesentlichen geradlinig auf beiden Seiten der Längsachse erstrecken. Ein geradliniges Trägerelement bietet den Vorteil, dass die Kräfte der einzelnen darauf angeordneten Rotoren zum einen auf einem sehr kompakten Bauteil wirken und zum anderen keine Torsion des Bauteils erzeugen. Somit bringt eine geradlinige Verbindung zwischen den einzelnen Rotoren jeweils auf einer Seite der Längsachse eine hohe Steifigkeit bei gleichzeitig niedrigem Materialaufwand mit sich, insbesondere im Vergleich zu einer individuellen Verbindung jedes einzelnen Rotors zum Schwerpunkt des Fluggeräts. Zudem können an oder in den Verbindungsstücken zwischen den einzelnen Rotoren Kabel und/oder Leistungs- oder Steuerungselektronik untergebracht werden. Dies dient einem einfachen und übersichtlichen und darüber hinaus verschleißarmen Aufbau des Fluggeräts. Des Weiteren sind geradlinige Trägerelemente einfach zu bearbeiten und günstig in der Beschaffung.

Die Trägerelemente können mit Abstand zueinander angeordnet sein, miteinander verbunden sein oder integral ausgebildet sein. Bevorzugt können die Trägerelemente eine V-Form beschreiben. Bei einer geschlossenen V-Anordnung berühren sich die Trägerelemente im Schnittpunk mit der Symmetrieachse oder sind dort verbunden oder integral ausgebildet, während sie bei einer offenen V-Anordnung mit Abstand zueinander angeordnet sind. Die Trägerelemente können auch eine U-Form, H-Form oder II-Form beschreiben.

Erfindungsgemäß sind die Trägerelemente V-förmig symmetrisch bezüglich der Längsachse angeordnet. Durch eine derartige Ausführung kann ein Öffnungswinkel erzeugt werden, wodurch vorteilhaft das freie Sichtfeld zwischen den am meisten beabstandeten Rotoren weiter vergrößert wird. Zudem gestattet eine derartige V-Anordnung einen einfachen und insbesondere verwindungssteifen Aufbau, da nur ein Teil der Rotoren einen vergrößerten Abstand zum Schwerpunkt des Fluggeräts aufweist. Die übrigen Rotoren können sich nahe dem Schwerpunkt des Fluggeräts befinden, so dass sich kurze Verbindungswege zum Schwerpunkt ergeben und somit lediglich kurze und nicht zusätzlich verstärkte Strukturen zur Herstellung einer inneren Steifigkeit benötigt werden.

In einer weiteren bevorzugten Ausführungsform der Erfindung kann das Drehflügelfluggerät ferner zumindest ein Verstrebungselement umfassen, das zur Verbindung und/oder Verstrebung der Trägerelemente dienen kann. Damit kann eine zusätzliche Steifigkeit des Fluggeräts bereitgestellt werden. Besonders vorteilhaft kann das zumindest eine Verstrebungselement in Form eines X ausgebildet sein, d. h. ein besonders bevorzugter, verwindungssteifer Aufbau ergibt sich, wenn die geradlinigen Trägerelemente über kreuzförmige bzw. X-förmige Verstrebungselemente miteinander verbunden sind. Ein rechtwinkliger, starrer Knoten im X biete eine große Festigkeit und einfache Montage, ein lösbarer oder beweglicher Knoten im X begünstigt die Möglichkeiten einer Zerlegung oder eines Zusammenklappens des Fluggeräts.

In einer besonders bevorzugten Ausführungsform der Erfindung können die Verbindungen zwischen den Trägerelementen und dem zumindest einen Verstrebungselement lösbar ausgebildet sein. Dadurch wird ein einfach zerlegbarer, modularer Aufbau erreicht, was nicht nur einem schnellen Auf- und Abbau des Fluggeräts, sondern auch einem einfachen Austausch von beschädigten Teilen zugute kommt.

Als lösbare Verbindungen kommen insbesondere Rast-, Steck- und Schraubverbindungen in Betracht, die vorteilhaft mit geeigneten Verriegelungsmechanismen bereitgestellt sind. Die lösbaren Verbindungen können ferner über einen Entriegelungsmechanismus verfügen, der es erlaubt, dass sich die Verbindungen bei einer unkontrollierten Krafteinwirkung lösen. Im Falle einer unsanften Landung des Fluggeräts würden somit erst die lösbaren Verbindungen getrennt werden, bevor weitere Bauteile Schaden nehmen. Eine derartige Konstruktion kann in vielen Fällen dazu beitragen, dass ein Aufprall des Fluggeräts nicht zu einer Beschädigung der Bauteile sondern lediglich zu einer Lösung der Verbindungen führen würde. Als Entriegelungsmechanismus kommen sämtliche im Stand der Technik bekannten Vorrichtungen in Betracht, insbesondere leichtgewichtige Entriegelungsmechanismen von ausreichender Haltbarkeit.

In einer weiteren, besonders bevorzugten Ausführung der Erfindung können die Verbindungen zwischen den Trägerelementen und dem zumindest einen Verstrebungselement so ausgeführt werden, dass das gesamte Fluggerät mit wenigen Handgriffen in einen zusammengeklappten Zustand zusammengeklappt werden kann. Insbesondere können zu diesem Zweck hintere (enger zusammen liegende) Verbindungen drehbar ausgeführt sein und vordere (weiter auseinander liegende) Verbindungen lösbar ausgebildet sein. Bei einer derartigen Ausgestaltung können zum Zusammenklappen die vorderen Verbindungen gelöst werden und die Trägerelemente können dann um die hinteren Verbindungen nach innen, d.h. aufeinander zu, in den zusammengeklappten Zustand gedreht werden. Anschließend kann mittels der vorderen Verbindungen das zumindest eine Verstrebungselement erneut mit den Trägerelementen, eventuell an anderer Stelle, verbunden werden. Im zusammengeklappten Zustand wären somit beide Trägerelemente mit verringertem Abstand bevorzugt parallel zueinander angeordnet, wobei das gesamte Fluggerät fest montiert in einem Stück transportiert werden kann.

Vorteilhaft kann das Verstrebungselement so ausgestaltet sein, dass dessen Ausleger während des Zusammenklappens verkürzt werden können, beispielsweise teleskopartig. So können beim Zusammenklappen des Fluggeräts vor allem die vorderen Ausleger vor dem erneuten Verbinden mit den Trägerelementen verkürzt werden, was sich positiv auf die Kompaktheit im zusammengeklappten Zustand auswirkt.

Bei einem kreuzförmigen Verstrebungselement kann es besonders vorteilhaft sein, wenn der Winkel im Kreuzungspunkt veränderbar ist. Dadurch wird es ermöglicht, dass die Trägerelemente im zusammengeklappten Zustand mit besonders verringertem Abstand zueinander angeordnet werden können.

Vorteilhaft kann darüber hinaus das zumindest eine Verstrebungselement von geringerer mechanischer Belastbarkeit als die Trägerelemente ausgebildet sein. Somit kann das zumindest eine Verstrebungselement im Falle einer unkontrollierten Krafteinwirkung als Sollbruchstelle wirken. Auch dies kann dazu beitragen, dass ein Aufprall des Fluggeräts nicht zu einer Beschädigung wesentlicher Bauteile sondern lediglich zu einem Brechen des zumindest einen Verstrebungselements führen würde.

Die Träger- und Verstrebungselemente können aus Leichtbaumaterialien wie Aluminium, Magnesium oder Kohlefaserwerkstoffe oder dergleichen gebildet sein. Bevorzugt umfassen diese Elemente zumindest einen Profilträger oder Hohlträger, insbesondere einen I-, U-, Z-, L-, H- oder T-Träger, eine Doppeltraverse, ein Rund- oder Vierkantrohr, massiv oder hohl ausgebildet oder eine Kombination davon.

Vorteilhaft können die Träger- und Verstrebungselemente hohl ausgebildet sein. Dies dient zum einen der Gewichtseinsparung. Zum anderen lassen sich im Hohlraum der Elemente beispielsweise eine Kabelführung, eine Leistungselektronik, eine Steuerungselektronik, eine Energieversorgung und/oder Motoren zum Antrieb der Rotoren unterbringen.

Gemäß einem Aspekt der Erfindung kann die Anzahl der Rotoren so gewählt werden, dass eine Redundanz des Auftriebs gegeben ist, so dass die Flug- und Manövrierfähigkeit des Fluggeräts auch bei Ausfall eines Rotors erhalten bleibt. Redundanz ist insbesondere dann gegeben, wenn in jedem Quadranten, die zwischen der Längsachse und einer Querachse des Fluggeräts definiert werden, mehr als ein Rotor wirkt. In einer besonders bevorzugten Ausführungsform der Erfindung kann daher das Drehflügelfluggerät zumindest acht Rotoren umfassen. Bei Ausfall eines oder mehrerer Rotoren können die verbleibenden Rotoren dann so angesteuert werden, dass das Fluggerät flugtauglich bleibt

In einer weiteren bevorzugten Ausführungsform der Erfindung kann das Drehflügelfluggerät ferner ein Rumpfelement umfassen. Das Rumpfelement befindet sich vorteilhaft in der Nähe des Schwerpunkts des Fluggeräts und kann als Basis bzw. Aufnahme für die Steuerungs- und Leistungselektronik und die Energieversorgung, sowie als das Verstrebungselement zu den Trägerelementen dienen. Ferner können am Rumpfelement optische und/oder sensorische Elemente oder eine Halterung für optische und/oder sensorische Elemente angeordnet sein. Eine Konzentration dieser Lasten in der Nähe des Schwerpunkts des Fluggeräts hat verbesserte Flugeigenschaften zur Folge.

Vorteilhaft kann das Rumpfelement bezüglich der übrigen Struktur schwingungsgedämpft angeordnet sein. Dadurch gelingt eine Entkoppelung der optional am Rumpfelement angebrachten Komponenten von den durch die Rotoren erzeugten Schwingungen. Im Falle der optischen und/oder sensorischen Elemente trägt dies zu einer verbesserten Qualität der erfassten Daten oder Bilder bei. Als Schwingungsdämpfung kommen sämtliche im Stand der Technik bekannten Vorrichtungen und Verfahren in Betracht, wie beispielsweise Gummitüllen, Federelemente etc. Durch die schwingungsgedämpfte Aufhängung des gesamten Rumpfelements wird die gesamte Masse der Rumpfeinheit inklusive der Energieversorgung vorteilhaft als Masse zur Dämpfung hochfrequenter Vibrationen genutzt.

Vorteilhaft kann die Anordnung sämtlicher Bauteile des Fluggeräts inklusive etwaiger Aufbauten wie optische und/oder sensorische Elemente so gewählt werden, dass der resultierende Schwerpunkt mit einem räumlichen Mittelpunkt des Fluggeräts nahezu oder vollständig zur Deckung kommt. Der räumliche Mittelpunkt des Fluggeräts entspricht dabei einem Punkt mittig innerhalb der räumlichen Begrenzungen des Fluggeräts. Besonders vorteilhaft wäre eine Anordnung, bei der in einem Schwebeflug des Fluggeräts, d.h. ohne Vorwärts- oder Seitwärtsbewegung, alle Rotoren einen gleichen oder nahezu gleichen Schub liefern. Dies wirkt sich zum einen günstig auf die Flugeigenschaften aus, zum anderen verschleißen dadurch die beweglichen Teile wie Motoren und Rotoren in etwa gleich schnell, was die Wartungsintervalle verlängert und die Reparaturanfälligkeit senkt.

Durch eine beispielhafte Kombination der bevorzugten Konfigurationen "offenes V", "kreuzförmiges rechtwinkliges Verbindungselement" sowie "schwingungsgedämpftes Rumpfelement" kann sich folgender sehr vorteilhafter Aufbau ergeben: Der Knotenpunkt des X-förmigen Verstrebungselements kann auf der Längsachse hinter dem räumlichen Mittelpunkt des Fluggeräts liegen. Das Rumpfelement kann schwingungsgedämpft auf dem kreuzförmigen Verbindungselement montiert werden. An das hinter dem Mittelpunkt befindliche Rumpfelement kann eine sich nach vorne erstreckende schwenkbare Halterung für optische und/oder sensorische Elemente montiert werden. An dieser Halterung angebrachte optische und/oder sensorische Elemente befinden sich dann auf der Längsachse vor dem Rumpfelement und vor dem Mittelpunkt des Fluggeräts. Dadurch kann ein sehr kompakter Aufbau und bei entsprechender Auslegung ein ausgeglichener Schwerpunkt nahe dem räumlichen Mittelpunkt des Fluggeräts und gleichzeitig ein maximales Sichtfeld erreicht werden.

Diese und weitere Einzelheiten, Merkmale und Vorteile des Gegenstandes der Erfindung ergeben sich aus den Unteransprüchen sowie aus der nachfolgenden Beschreibung der zugehörigen Zeichnungen, in denen - beispielhaft - bevorzugte Ausführungsbeispiele der Erfindung dargestellt sind. In den Zeichnungen gilt:
Fig. 1 ist eine schematische Draufsicht eines Drehflügelfluggeräts gemäß einer Ausführungsform der Erfindung;
Fig. 2 ist eine schematische Schrägansicht eines Drehflügelfluggeräts gemäß einer weiteren Ausführungsform der Erfindung.
Fig. 3 ist eine schematische Schrägansicht eines Drehflügelfluggeräts gemäß noch einer weiteren Ausführungsform der Erfindung.
Fig. 4a und 4b sind schematische Darstellungen, die den Mechanismus des Zusammenklappens gemäß einer Ausführungsform der Erfindung veranschaulichen.

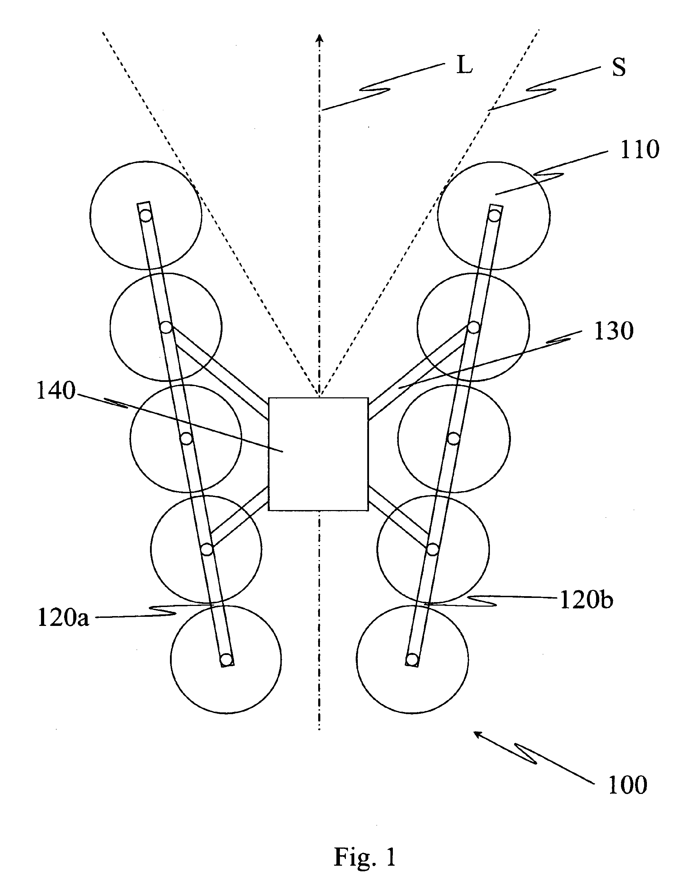

Mit Bezug auf Fig. 1 ist ein Drehflügelfluggerät 100 mit insgesamt zehn Rotoren 110 dargestellt. Die Rotoren 110 sind auf Trägerelementen 120a, 120b entlang beider Seiten eine Längsachse L des Fluggeräts angeordnet. Die Trägerelemente 120a, 120b sind über Verstrebungselemente 130 verbunden. An den Verstrebungselementen 130 in der Nähe des Schwerpunkts des Fluggeräts angebracht befindet sich ein Rumpfelement 140. Das Rumpfelement 140 dient zum Tragen der Steuerungselektronik und Energieversorgung (nicht gezeigt) und eventueller optischer und/oder sensorischer Elemente.

Die Verbindungen zwischen den einzelnen Elementen sind aus Kunststoffschrauben (nicht gezeigt) ausgebildet. Diese weisen im Allgemeinen eine hohe Widerstandsfähigkeit bezüglich Zug- und Druckbelastung und eine verringerte Widerstandsfähigkeit gegenüber Scherkräften auf. Dadurch können diese als Sollbruchstellen wirken, während sie gleichzeitig die Tragfähigkeit und Stabilität des Fluggeräts nicht negativ beeinflussen. Ferner sind Kunststoffschrauben leichtgewichtig und günstig in der Herstellung.

Die Kunststoffschrauben eignen sich zudem dafür, dass das Fluggerät einfach zerlegt und wieder aufgebaut werden kann. Dies erleichtert zum einen den Transport, zum anderen lassen sich defekte Bauteile einfach und schnell austauschen.

In der in Figur 1 gezeigten Ausführungsform sind die Trägerelemente 120a, 120b geradlinig und achsensymmetrisch auf beiden Seiten der Längsachse L ausgerichtet. Die in Richtung der Längsachse L vorne liegenden Rotoren, angedeutet durch den Pfeil der Längsachse L, weisen einen größeren Abstand zueinander auf, als die jeweils dahinter liegenden. Dies wird dadurch erreicht, dass die geradlinigen Trägerelemente 120a, 120b in einem spitzen Winkel zur Längsachse L angeordnet sind.

Aufgrund dieser Anordnung wird im vorderen Bereich des Fluggeräts ein freies Sichtfeld, angedeutet durch die gestrichelten Linien S, definiert. In einem Bereich von ± 30° zur Längsachse L, ausgehend vom Rumpfelement 140, befinden sich weder Rotor- noch Trägerelementteile oder sonstige Bauteile des Fluggeräts im Sichtfeld. Es wird dadurch einem auf dem Rumpf 140 angebrachten optischen oder sensorischen Element (nicht gezeigt) ermöglicht, die vor dem Fluggerät liegende Umgebung störungsfrei zu erfassen. Insbesondere ist es dadurch möglich, die Umgebung des Fluggeräts kontinuierlich von einem Bereich oberhalb der Rotorebene, durch die Rotorebene hindurch, und zu einem Bereich unterhalb der Rotorebene zu erfassen, ohne dass dabei Bauteile des Fluggeräts in den Erfassungsbereich ragen.

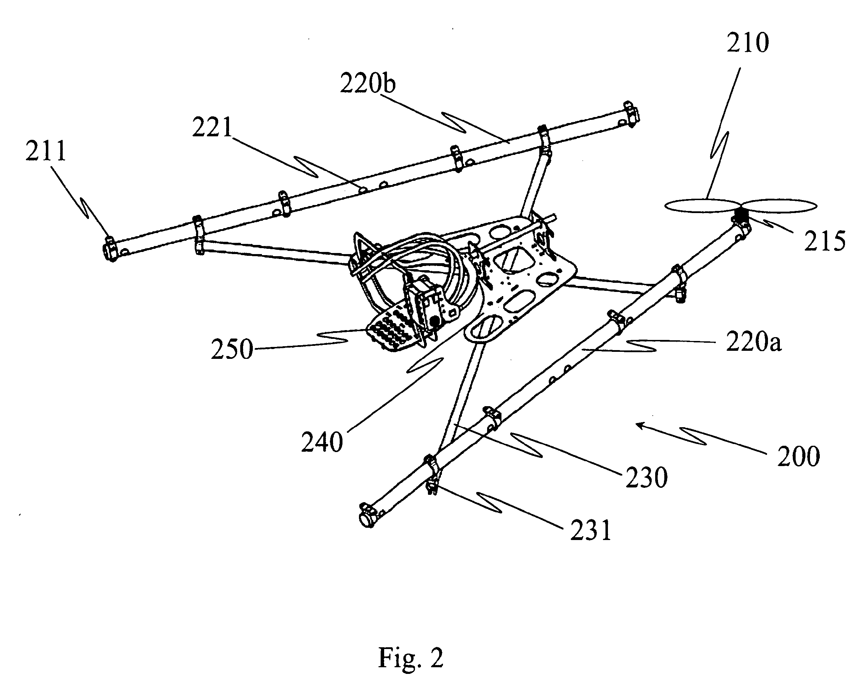

Fig. 2 zeigt eine Schrägansicht einer weiteren Ausführungsform der Erfindung. Für eine bessere Übersichtlichkeit sind sieben der acht Rotoren 210 und Motoren 215 nicht gezeigt.

Zwei Trägerelemente 220a, 220b sind als offenes V angeordnet und über X-förmige Verstrebungselemente 230 miteinander verbunden. Die Verbindungen zwischen den Trägerelementen 220a, 220b und den Verstrebungselementen 230 werden durch Schellen 231 bereitgestellt. Die Schellen sind weniger widerstandsfähig als die Trägerelemente 220a, 220b und die Verstrebungselemente 230 und können daher als Sollbruchstellen dienen. Darüber hinaus lassen sie sich schnell und einfach lösen, so dass die Trägerelemente 220a, 220b von den Verstrebungselementen 230 abgenommen werden können.

Auf jedem Trägerelement 220a und 220b befinden sich vier Motorhalter 211 in gleichmäßigem Abstand zueinander, auf denen Motoren 215 angebracht sind, die die Rotoren antreiben. Bei den Motoren 215 handelt es sich um bürstenlose und sensorlose Elektromotoren, die jeweils über eine zugewiesene Leistungselektronik (nicht gezeigt) angesteuert werden. Jedem einzelnen Rotor ist dabei ein Elektromotor zugeordnet, so dass sich eine maximale Manövrierfähigkeit ergibt.

Im Kreuzungspunkt der Verstrebungselemente 230 ist ein Rumpfelement 240 vibrationsgedämpft angebracht. In der in Fig. 2 gezeigten Ausführungsform trägt das Rumpfelement 240 eine bewegliche Kamerahalterung 250. Die Konfiguration ist so abgestimmt, dass das Rumpfelement 240 hinter und die Kamerahalterung 250 vor dem räumlichen Mittelpunkt des Fluggeräts liegt. Beide Elemente zusammen ergeben nach Montage einer Kamera (nicht gezeigt) an der Kamerahalterung einen neutralen Schwerpunkt, so dass bei einem Schwebeflug des Fluggeräts alle Rotoren den gleichen Schub liefern.

Die Kamerahalterung 250 ist bezüglich einer horizontalen Ebene des Fluggeräts um ± 120° und bezüglich einer vertikalen Ebene des Fluggeräts um ± 30° motorgetrieben schwenkbar, so dass eine daran angebrachte Kamera (nicht gezeigt) durch einfaches Schwenken die Bereiche oberhalb, vor und unterhalb des Fluggeräts aufzeichnen kann. Durch die Schwenkbarkeit können ferner Roll- und Nickbewegungen des Fluggeräts, wie sie beispielsweise durch Beschleunigung und Kurvenflug verursacht werden, aktiv ausgeglichen werden.

Bei den Trägerelementen 220a, 220b handelt es sich um Hohlkörper mit einem Durchmesser, der eine Unterbringung der Leistungselektronik zur Ansteuerung der Motoren 215 erlaubt.

Die Kabel (nicht gezeigt) zur Energieversorgung und Ansteuerung der einzelnen Komponenten werden ausgehend vom Rumpfelement 240 durch die Kabelöffnungen 221 in die Trägerelemente 220a, 220b und im weiteren Verlauf innerhalb dieser geführt. Zu einer einfachen Zerlegbarkeit sind Stecker zur Trennung der Kabelverbindung vorgesehen. So kann das in Fig. 2 gezeigte System mit wenigen Handgriffen in drei handliche Teile demontiert werden.

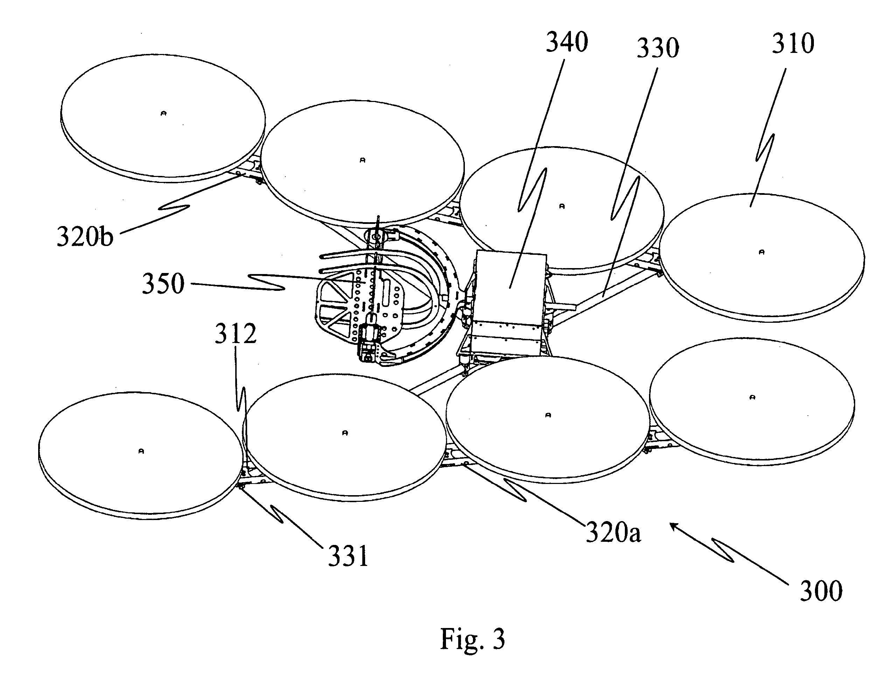

Fig. 3 zeigt eine Schrägansicht noch einer weiteren Ausführungsform der Erfindung. Auch hier umfasst das Fluggerät zwei Trägerelemente 320a, 320b, die als offenes V angeordnet sind. Die Trägerelemente 320a, 320b sind über X-förmige Verstrebungselemente 330 miteinander verbunden. Auf jedem Trägerelement 320a und 320b befinden sich vier Rotoren 310 in gleichmäßigem Abstand zueinander (schematisch gezeigt).

Jedes Trägerelement 320a und 320b ist jeweils aus einem Paar von Hohlkörpern ausgebildet. Zwischen jedem Hohlkörperpaar sind mehrere kurze Verbindungsstege 312 angebracht, von denen einige zugleich als Motorhalterungen (nicht gezeigt) bzw. zur Verbindung 331 des jeweiligen Trägerelements 320a, 320b mit den Verstrebungselementen 330 dienen.

Der Knotenpunkt der X-förmigen Verstrebungselemente 330 liegt auf der Längsachse hinter dem räumlichen Mittelpunkt des Fluggeräts 300. Im Kreuzungspunkt der Verstrebungselemente 330 ist ein Rumpfelement 340 schwingungsgedämpft angebracht. An das Rumpfelement 340 entlang der Längsachse nach vorne ist eine um 2 Achsen schwenkbare Halterung 350 für eine Kamera angebracht. Eine daran befestigte Kamera befindet sich folglich vor dem räumlichen Mittelpunkt des Fluggeräts 300. Es ergeben sich daraus ein sehr kompakter Aufbau und ein ausgeglichener Schwerpunkt und gleichzeitig ein maximales Sichtfeld der Kamera.

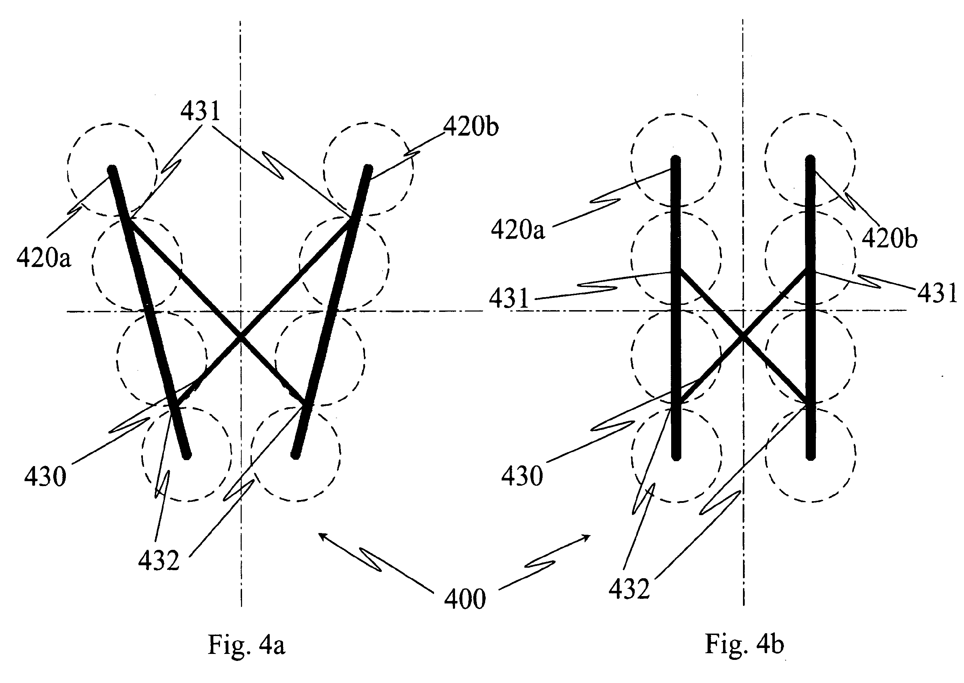

Fig. 4a und 4b veranschaulichen den Mechanismus des Zusammenklappens gemäß einer bevorzugten Ausführungsform der Erfindung. Fig. 4a zeigt dabei den aufgeklappten Zustand, in dem das Fluggerät 400 betrieben wird. Fig. 4b zeigt den zusammengeklappten Zustand, in dem das Fluggerät 400 transportiert wird.

Zur Realisierung des Klappmechanismus sind die hinteren (enger zusammen liegenden) Verbindungen 432 zwischen Trägerelement 420a, 420b und X-förmigem Verstrebungselement 430 drehbar ausgeführt und die vorderen (weiter auseinander liegenden) Verbindungen 431 lösbar ausgebildet. Zum Zusammenklappen werden die vorderen Verbindungen 431 gelöst und die Trägerelemente 420a, 420b dann um die hinteren Verbindungen 432 nach innen, d.h. aufeinander zu, in den in Fig. 4b gezeigten zusammengeklappten Zustand gedreht. In dieser Konfiguration sind die Trägerelemente 420a, 420b eng beieinander parallel angeordnet.

Anschließend werden die vorderen Ausleger des Verstrebungselements 430 teleskopartig eingefahren und somit verkürzt. Zuletzt wird über die vorderen Verbindungen 431 das Verstrebungselement 430 erneut mit den Trägerelementen 420a, 420b an anderer Stelle verbunden. In dieser in Fig. 4b gezeigten Endkonfiguration kann das gesamte Fluggerät fest montiert in einem Stück transportiert werden.

Die vorgenannten sowie beanspruchten und in den Ausführungsbeispielen beschriebenen erfindungsgemäß zu verwendenden Bauteile unterliegen in ihrer Größe, Form, Gestaltung, Materialauswahl und technischen Konzeptionen keinen besonderen Ausnahmebedingungen, so dass die in dem Anwendungsgebiet bekannten Auswahlkriterien uneingeschränkt Anwendung finden können.

Andere Ausführungsformen der Erfindung werden Fachleuten von der Berücksichtigung der Beschreibung und der Anwendung der hierin offenbarten Erfindung ersichtlich werden. Insbesondere wird Fachleuten ersichtlich sein, dass die Trägerelemente mit den Rumpf- und/oder Verstrebungselementen auch permanent verbunden oder integral ausgebildet sein können. Des weiteren ist Fachleuten bekannt, dass ein Fluggerät gemäß der Erfindung bezüglich jeder der drei Flugachsen Längsachse, Querachse und Hochachse gleichwertige oder nahezu gleichwertige Flugeigenschaften aufweist, so dass es sich bei der Längsachse lediglich um die bevorzugte, nicht um die ausschließliche Richtung einer Vorwärtsbewegung des Fluggeräts handelt. Ferner wird nicht ausgeschlossen, dass ein Drehflügelfluggerät gemäß der Erfindung für einen bemannten Flug zum Einsatz kommt, so dass die hierin genannten vorteilhaften Eigenschaften den darauf befindlichen Personen zugute kommen. Es ist daher beabsichtigt, dass die Beschreibung und die Beispiele lediglich exemplarisch betrachtet werden, wobei der Umfang der Erfindung durch die angehängten Ansprüche definiert wird.

## Patentansprüche

1. Drehflügelfluggerät (100), umfassend zumindest vier an Trägerelementen (120a, 120b) angeordnete Rotoren (110),
wobei die Rotoren (110) und Trägerelemente (120a, 120b) derart angeordnet sind, dass entlang einer Längsachse (L) des Drehflügelfluggeräts (100) zumindest zwischen zwei endständigen Rotoren ein freies Sichtfeld (S) definiert wird, und die Trägerelemente (120a, 120b) eine geradlinige Verbindung zwischen den Rotoren jeweils auf einer Seite der Längsachse (L) bereitstellen **dadurch gekennzeichnet, dass** die Trägerelemente (120a, 120b) V-förmig symmetrisch bezüglich der Längsachse angeordnet sind.

2. Drehflügelfluggerät nach Anspruch 1,
**dadurch gekennzeichnet, dass** sich die Trägerelemente (120a, 120b) im Wesentlichen geradlinig auf beiden Seiten der Längsachse (L) erstrecken.

3. Drehflügelfluggerät nach einem der vorherigen Ansprüche,
**dadurch gekennzeichnet, dass** das freie Sichtfeld (S), ausgehend vom Schwerpunkt des Fluggeräts, eine Ausdehnung bezüglich der Längsachse von mehr als ± 15° sowohl in der horizontalen als auch in der vertikalen Ebene aufweist.

4. Drehflügelfluggerät nach einem der vorherigen Ansprüche,
**dadurch gekennzeichnet, dass** das Drehflügelfluggerät ferner zumindest ein Verstrebungselement (130) zur Verstrebung der Trägerelemente (120a, 120b) umfasst.

5. Drehflügelfluggerät nach Anspruch 4,
**dadurch gekennzeichnet, dass** das zumindest eine Verstrebungselement (130) in Form eines X ausgebildet ist.

6. Drehflügelfluggerät nach einem der Ansprüche 4 oder 5,
**dadurch gekennzeichnet, dass** die Verbindungen zwischen dem zumindest einen Verstrebungselement (130) und den Trägerelementen (120a, 120b) lösbar und/oder drehbar ausgebildet sind.

7. Drehflügelfluggerät nach einem der vorherigen Ansprüche,
ferner umfassend ein Rumpfelement (140) mit zumindest einer Halterung zur Aufnahme von zumindest einem optischen und/oder sensorischen Element.

8. Drehflügelfluggerät nach Anspruch 7,
**dadurch gekennzeichnet, dass** die zumindest eine Halterung verstellbar in der Nähe des Schwerpunkts des Drehflügelfluggeräts angeordnet ist.

9. Verwendung eines Drehflügelfluggeräts gemäß Anspruch 7 oder 8 zur Umwelterfassung durch daran angeordnete optische und/oder sensorische Elemente.

## Claims

1. Rotary-wing aircraft (100), comprising at least four rotors (110), which are disposed on girder elements (120a, 120b),
wherein said rotors (110) and girder elements (120a, 120b) are disposed such that a free field of vision (S) is defined along a longitudinal axis (L) of said rotary-wing aircraft (100) at least between two terminal rotors and wherein the girder elements (120a, 120b) provide a straight-line connection between the rotors on each side of the longitudinal axis (L),
**characterized in that** the girder elements (120a, 120b) are disposed in a V shape symmetrically with respect to the longitudinal axis (L).

2. Rotary-wing aircraft according to claim 1,
**characterized in that** said girder elements (120a, 120b) extend substantially in a straight line on both sides of the longitudinal axis (L).

3. Rotary-wing aircraft according to one of the previous claims,
**characterized in that** the free field of vision (S), originating from the center of gravity of the aircraft, has an extension with respect to the longitudinal axis of more than ± 15° in both the horizontal and the vertical planes.

4. Rotary-wing aircraft according to one of the previous claims,
**characterized in that** said rotary-wing aircraft further comprises at least one strut element (130) for bracing said girder elements (120a, 120b).

5. Rotary-wing aircraft according to claim 4,
**characterized in that** said at least one strut element (130) is configured in the shape of an X.

6. Rotary-wing aircraft according to one of claims 4 or 5,
**characterized in that** the connections between said at least one strut element (130) and said girder elements (120a, 120b) are releasably and/or rotatably configured.

7. Rotary-wing aircraft according to one of the previous claims,
further comprising a body element (140) with at least one mounting for accommodation of at least one optical and/or sensor element.

8. Rotary-wing aircraft according to claim 7,
**characterized in that** said at least one mounting is adjustably disposed in proximity to the center of gravity of said rotary-wing aircraft.

9. Use of a rotary-wing aircraft according to claim 7 or 8 for environment capture by optical and/or sensor elements disposed upon it.

## Revendications

1. Giravion (100) comprenant au moins quatre rotors (110) disposés sur des éléments porteurs (120a, 120b),
dans lequel les rotors (110) et les éléments porteurs (120a, 120b) sont ainsi disposés que le long d'un axe longitudinal (L) du giravion (100), un champ visuel libre (S) est défini entre au moins deux rotors d'extrémité, et les éléments porteurs (120a, 120b) mettent en place une liaison en ligne droite entre les rotors, respectivement sur un côté de l'axe longitudinal (L),
**caractérisé en ce que** les éléments porteurs (120a, 120b) sont disposés symétriquement en V par rapport à l'axe longitudinal.

2. Giravion selon la revendication 1, **caractérisé en ce que** les éléments porteurs (120a, 120b) s'étendent essentiellement en ligne droite des deux côtés de l'axe longitudinal (L).

3. Giravion selon la revendication 1 ou 2, **caractérisé en ce que** le champ visuel libre (S) partant du centre de gravité de l'aéronef, présente un allongement par rapport à l'axe longitudinal de plus de ± 15° tant dans le plan horizontal que vertical.

4. Giravion selon l'une des revendications précédentes, **caractérisé en ce que** le giravion comprend en outre au moins un élément de contrefort (130) pour soutenir les éléments porteurs (120a, 120b).

5. Giravion selon la revendication 4, **caractérisé en ce que** l'au moins un élément de contrefort (130) a la forme d'un X.

6. Giravion selon la revendication 4 ou 5, **caractérisé en ce que** les liaisons entre l'au moins un élément de contrefort (130) et les éléments porteurs (120a, 120b) sont conçues en étant séparables et/ou rotatives.

7. Giravion selon l'une des revendications précédentes, comprenant en outre un élément de carlingue (140) avec au moins une fixation pour recevoir au moins un élément optique et/ou de détection.

8. Giravion selon la revendication 7, **caractérisé en ce que** l'au moins une fixation est disposée en étant réglable à proximité du centre de gravité du giravion.

9. Emploi d'un giravion selon la revendication 7 ou 8, pour des détections environnementales par des éléments optiques et/ou de détection.
